# EUROPEAN PATENT APPLICATION

(11) **EP 4 843 780 A1**
(43) Date of publication of application: **25.11.2026**
(21) Application number: 26180739.0
(22) Date of filing: 22.05.2026
(51) Int. Cl.: B33Y 50/02, G06T 7/00

(54) **DATA REDUCTION OF IN-PROCESS IMAGES**

(30) Priority: 23.05.2025 US 202519217475
(71) Applicant: RTX Corporation, Farmington, CT 06032 (US)
(72) Inventor: BINEK, Lawrence, Glastonbury, 06033 (US); GARDELL, Benjamin, Bristol, 06010 (US)
(74) Representative: Dehns

(57) **Abstract**

A method (400) of generating region-specific in-process monitoring data includes capturing (404) a first in-process image of a known area of a working surface of a layer-by-layer manufacturing device during manufacture of a workpiece on the working surface, receiving (406) first contour data for a current layer of the workpiece, identifying (408) a first expected part area within the first in-process image that is predicted to capture the current layer of the workpiece based on the first contour data and dimensions of the known area, generating (410) a first data boundary mask based on the first expected part area, and deleting (412) pixel data of the first in-process image outside of the first data boundary mask to generate a first reduced in-process image.

## Description

### FIELD OF THE INVENTION

The present invention relates to systems and methods of additive manufacturing, and, particularly, to systems and methods for reducing data sizes for in-process images captured during additive manufacturing processes.

### BACKGROUND

Additive manufacturing processes create three-dimensional structures by sequential, layer-by-layer material addition. Powder-bed fusion (PBF) is one additive manufacturing technique that uses a laser or electron beam to melt and fuse pulverant material to create a solid, three-dimensional object. The melting of the pulverant occurs in a small localized region of the energy beam, producing small volumes of melting, followed by rapid solidification, thereby allowing for very precise control of the solidification process in the layer-by-layer fabrication of the workpiece. Additional layers of pulverant material are applied over the work stage, and sintered to the underlying layer. In this way, a complex three-dimensional part is built up layer-by-layer.

### SUMMARY

According to an aspect of the present invention, a method of generating region-specific in-process monitoring data includes capturing a first in-process image of a known area of a working surface of a layer-by-layer manufacturing device during manufacture of a workpiece on the working surface, receiving first contour data for a current layer of the workpiece, identifying a first expected part area within the first in-process image that is predicted to capture the current layer of the workpiece based on the first contour data and dimensions of the known area, generating a first data boundary mask based on the first expected part area, and deleting pixel data of the first in-process image outside of the first data boundary mask to generate a first reduced in-process image.

Optionally, and in accordance with the above, the first data boundary mask defines a first area that is identical to the first expected part area.

Optionally, and in accordance with any of the above, the first data boundary mask defines a first masked area that is larger than the first expected part area.

Optionally, and in accordance with any of the above, the first boundary mask defines a first masked area having edges that are spaced from edges of the first expected part area by an offset value.

Optionally, and in accordance with any of the above, the offset amount is based on at least one of: a parameter of the layer-by-layer manufacturing device for forming the current layer, and a property of a pulverant used to form the current layer.

Optionally, and in accordance with any of the above, the method further comprises receiving process parameters for the current layer, wherein generating the first boundary mask comprises generating the first data boundary mask based on the first expected part area and the process parameters.

Optionally, and in accordance with any of the above, the first boundary mask defines a first masked area having edges that are spaced from edges of the first expected part area: within a first region by a first offset value; and within a second region by a second offset value.

Optionally, and in accordance with any of the above, the method further comprises: receiving first process parameters for formation of the first region by the layer-by-layer manufacturing device; receiving second process parameters for formation of the second region by the layer-by-layer manufacturing device; generating the first offset value based on the first process parameters; and generating the second offset value based on the second process parameters.

Optionally, and in accordance with any of the above, the layer-by-layer additive manufacturing device is a powder-bed fusion additive manufacturing device, and wherein generating the first data boundary mask comprises: simulating formation of the current layer by powder-bed fusion additive manufacturing to identify a first predicted defect at a first location and a second predicted defect at a section location; defining the first region based on the first location and the second region based on the second location; generating the first offset value based on at least one of a type and a severity of the first predicted defect; and generating the second offset value based on at least one of a type and a severity of the second predicted defect.

Optionally, and in accordance with any of the above, the method further comprises: forming a second layer of the workpiece on the current layer using the layer-by-layer manufacturing device; capturing a second in-process image of the known area of a working surface of a layer-by-layer manufacturing device, the second in-process depicting the second layer of the workpiece; receiving second contour data for the second layer of the workpiece; based on the second contour data and dimensions of the known area, identifying a second expected part area within the second in-process image that is predicted to capture the second layer of the workpiece; generating a second data boundary mask based on the second expected part area; and deleting pixel data of the second in-process image outside of the second data boundary mask to generate a second reduced in-process image.

Optionally, and in accordance with any of the above, the second expected part area is different than the first expected part area.

Optionally, and in accordance with any of the above, the method further comprises: forming a third layer of the workpiece on the second layer using the layer-by-layer manufacturing device; capturing a third in-process image of the known area of a working surface of a layer-by-layer manufacturing device, the third in-process depicting the third layer of the workpiece; receiving third contour data for the third layer of the workpiece; based on the third contour data and dimensions of the known area, identifying a third expected part area within the third in-process image that is predicted to capture the third layer of the workpiece; generating a third data boundary mask based on the third expected part area; and deleting pixel data of the third in-process image outside of the third data boundary mask to generate a third reduced in-process image.

Optionally, and in accordance with any of the above, the known area includes an entire extent of the working surface.

Optionally, and in accordance with any of the above, capturing the first in-process image comprises capturing the first in-process image with a thermal imaging sensor, such that the first in-process image is a thermal image.

Optionally, and in accordance with any of the above, capturing the first in-process image comprises capturing the first in-process image with a visual spectrum sensor, such that the first in-process image is a visual spectrum image.

Optionally, and in accordance with any of the above, the method further comprises analyzing the first reduced in-process image to identify a region of the current layer likely to have a defect.

Optionally, and in accordance with any of the above, capturing the first in-process image comprises capturing the first in-process image using a first camera having a first resolution, and further comprising, in response to identifying the region of the current layer: adjusting at least one parameter of a second camera for capturing a close-up image of the region, the second camera having a second resolution that is greater than the first camera; and capturing the close-up image of the region using the second camera, wherein the close-up image of the region depicts a smaller area than the known area captured in the in-process image.

Optionally, and in accordance with any of the above, wherein: the first camera comprises a first type of imaging sensor, such that the first in-process image is a first image type and the first reduced in-process image is the first image type; and the second camera comprises a second type of imaging sensor, such that the close-up image is a second image type.

According to another aspect of the present invention, a method of generating region-specific in-process monitoring data includes capturing an in-process image of a known area of a working surface of a layer-by-layer manufacturing device, receiving first contour data for a current layer of a workpiece on the working surface, identifying a first expected part area within the in-process image that is predicted to capture the current layer of the workpiece based on the first contour data and dimensions of the known area, generating a first data boundary mask based on the first expected part area, deleting pixel data of the in-process image outside of the first data boundary mask to generate a first reduced in-process image, analyzing at least one of the in-process image and the first reduced in-process image to identify a region of the current layer likely to have a defect, and adjusting at least one parameter of a second camera for capturing a close-up image of the region. The second camera has a second resolution that is greater than the first camera. The method further includes, after adjusting the at least one parameter, capturing the close-up image of the region using the second camera.

Optionally, and in accordance with the above, the method further comprises, after capturing the close-up image, forming a next layer of the workpiece using the layer-by-layer manufacturing device.

The present summary is provided only by way of example, and not limitation. Other aspects of the present invention will be appreciated in view of the entirety of the present invention, including the entire text, claims, and accompanying figures.

### BRIEF DESCRIPTION OF THE DRAWINGS

FIG. 1A is a schematic diagram of an example of a layer-by-layer manufacturing system.
FIG. 1B is a schematic diagram of an example of a controller suitable for use with the layer-by-layer manufacturing apparatus of FIG. 1A.
FIG. 2A is a schematic diagram of an example of an image of a powder bed including multiple intermediate workpieces.
FIG. 2B is a schematic diagram of an example of a boundary mask applied to a portion of the image data of FIG. 2A containing one intermediate workpiece.
FIG. 3 is an example of a boundary mask applied to an image of additively manufactured parts.
FIG. 4 is a flow diagram of an example of a method of reducing image data of additively manufactured parts using boundary masks.
FIG. 5 is a flow diagram of a method of generating a boundary mask.

While the above-identified figures set forth one or more examples of the present invention, other examples are also contemplated, as noted in the discussion. In all cases, this invention presents the invention by way of representation and not limitation. It should be understood that numerous other modifications and examples can be devised by those skilled in the art, which fall within the scope and spirit of the principles of the invention. The figures may not be drawn to scale, and applications and examples of the present invention may include features and components not specifically shown in the drawings.

### DETAILED DESCRIPTION

The present description relates to systems and methods for data-reduction of in-process images generated during additive manufacturing processes. As will be explained in more detail subsequently, significant volumes of in-process data can be generated during additive manufacturing processes. This in-process data enables evaluation of build quality, identification of defects, and evaluation of other properties of intermediate layers formed during a layer-by-layer (i.e., additive) manufacturing process. Advantageously, the systems and methods disclosed herein are able to produce reduced-data images based on adaptive boundary masks. The boundary masks described herein enable preservation of image data both of an intermediate part layer and of relevant portions of a build surface (e.g., a surface of a pulverant). The reduced-data images described herein and the boundary masks used to generate those reduced-data images can be generated in an automated manner, enabling data reduction without increasing labor, requiring manual inspection, etc.

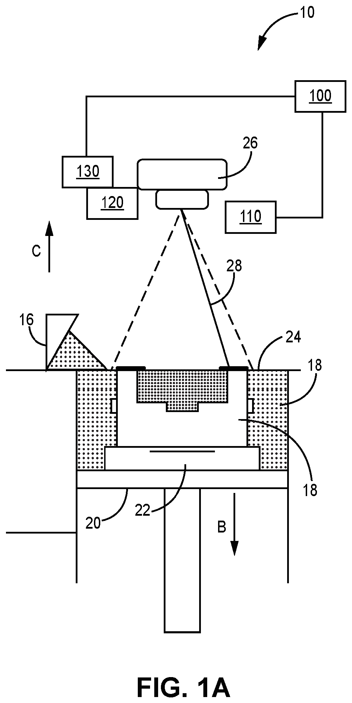

FIG. 1A is a schematic cross-sectional diagram of additive manufacturing system 10, which is an example of a system for layer-by-layer manufacturing of components, parts, etc. Additive manufacturing system 10 is a powder bed fusion apparatus and includes recoater blade 16, powder bed 18, platform 20, build plate 22, working surface 24, energy source 26, beam 28, workpiece 30, controller 100, wide-view camera 110, close-up camera 120, and camera adjustment mechanism 130. FIG. 1A also depicts directional arrows B and C.

Recoater blade 16 is used to transfer layers of pulverant material from a pulverant source to powder bed 18. Platform 20 is attached to build plate 22 and enables build plate 22 to be lowered and raised in directions shown by arrows B and C, respectively. Additive manufacturing system 10 can include one or more motors for moving platform 20 and, thereby, adjusting the height of build plate 22. The action of recoater blade 16 forms working surface 24, which is the top layer of pulverant material that can be sintered by energy source 26.

Energy source 26 is a radiation source for sintering the pulverant material at working surface 24. Energy source 26 is capable of directing beam 28 towards working surface 24 to selectively sinter a layer of workpiece 30. In at least some examples, energy source 26 is a laser. Additive manufacturing typically involves creating a three-dimensional model (e.g., a computer-aided design model) of a desired part, component, etc. The three-dimensional model is then processed into slices. Each slice defines one layer to be built by the additive manufacturing apparatus (e.g., additive manufacturing system 10). The layer information provides geometric instructions for operating energy source 26 to generate a part, component, etc.

The outer periphery of the part, component, etc. defined by a slice (i.e., in a plane substantially parallel with build plate 22) can be referred to as a "contour" of the layer and the interior volume of the layer defined by the contour can be referred to as the "bulk" or "bulk surface" of the layer. In at least some examples, the contour and bulk surfaces of each layer can be sequentially sintered by energy source 26 (i.e., such that the contour is sintered entirely before or after the bulk surface).

Different build parameters can be assigned to the contour and bulk sections of each layer and/or for particular regions of the layer (e.g., particular portions of the contour and bulk sections of each layer). The build parameters can define one or more operational parameters of energy source 26 such as one or more of an intensity of beam 28, a wavelength of beam 28, and a scanning speed of energy source 26, among other options.

Workpiece 30 is an intermediate workpiece built by selective sintering of power bed 18 and is the result of several iterations of selective sintering. Workpiece 30 is made up of the same material as the pulverant contained in powder bed 18, sintered by beam 28 emitted by energy source 26 to form a single monolithic piece. After each layer is sintered by beam 28 of energy source 26, platform 20 (and therefore build plate 22) is lowered in direction shown by arrow B by the thickness of each layer. The layer thickness can be defined by the geometric instructions for the part (i.e., the build instructions derived from the three-dimensional model). Recoater blade 16 can then be operated to add more pulverant to powder bed 18 and create a new working surface 24. This process of sintering, lowering the platform, and recoating is repeated until the part is finished. Accordingly, arrow C shows the build direction of workpiece 30. When additive manufacturing is complete, unsintered pulverant in powder bed 18 can be removed, and workpiece 30 has the same shape as the desired part. Workpiece 30 can then be post-processed to remove workpiece 30 from build plate 22, to remove support structures, to finish surfaces of the workpiece, etc.

Large-format additive manufacturing build projects often include multiple workpieces built on a single, large build plate that is sized to hold multiple workpieces. Existing build plates used for these multi-component, large-format build projects have a single, continuous build surface. The large size of the build surface increases the likelihood of warpage and, further, prevents or impedes separate post-processing of individual components. Conversely, the build plates disclosed herein are multi-bed build plates that include a plurality of sub-plates received by a single carrier plate. The single carrier plate can be received by a platform of an additive manufacturing device, as described with respect to build plate 22 and platform 20. The relatively smaller size of the sub-plates reduces the likelihood of warpage and, further, enables each sub-plate to be independently post-processed. Where each sub-plate includes a single part or component, each part or component can be independently post-processed.

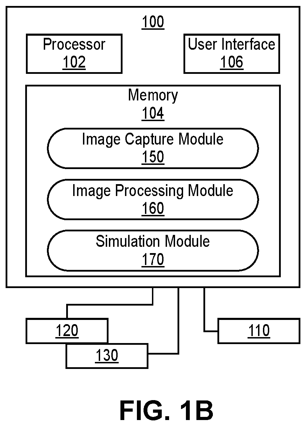

Controller 100 is an electronic controller for controlling operation of wide-view camera 110, close-up camera 120, and camera adjustment mechanism 130, as well as for processing image data collected by wide-view camera 110 and/or close-up camera 120. Controller 100 is described in more detail subsequently with respect to FIG. 1B. Both wide-view camera 110 and close-up camera 120 are cameras that capture top-down views of working surface 24.

Wide-view camera 110 is a camera for capturing image data (e.g., photographing) the entirety of build plate 22 and/or the entire portion of working surface 24 above build plate 22 (i.e., in direction C). Wide-view camera 110 include one or more camera sensors and has a wide field of view such that wide-view camera can view the entirety of build plate 22 and/or a portion of working surface 24 of power bed 18 above build plate 22. In some examples, the wide-view camera can be a wide-angle camera having a wide-angle lens.

Close-up camera 120 is a camera for capturing high-resolution images of particular regions of working surface 24. Close-up camera 120 can be positioned using camera adjustment mechanism 130 and, optionally, can include one or more analog zoom elements. Close-up camera 120 generally includes a combination of camera sensor and/or optical imaging elements that enable close-up camera 120 to take higher magnification and/or higher resolution images of build plate 22 than wide-view camera 110. However, close-up camera 120 generally depicts a smaller area of working surface 24 than wide-view camera 110. In at least some examples where build plate 22 is a large-format build plate including multiple workpieces (as discussed in more detail subsequently), close-up camera 120 depicts less than an entire workpiece. For example, close-up camera 120 can be configured to capture a specific portion of an intermediate workpiece layer identified as containing a defect or likely to contain a defect, thereby providing a higher-quality image of a possible defect than an image of the entire powder bed captured by wide-view camera 110.

Camera adjustment mechanism 130 includes one or more motors, actuators, etc. for adjusting the position of close-up camera 120 and thereby enables close-up camera to capture specific regions of working surface 24.

FIG. 1B is a schematic view of controller 100 and shows the electronic connections between controller 100 and each of wide-view camera 110, close-up camera 120, and camera adjustment mechanism 130. As depicted in FIG. 1B, controller 100 includes processor 102, memory 104, and user interface 106. Memory 104 includes image capture module 150, image processing module 160, and simulation module 170.

Processor 102 can execute software, applications, and/or programs stored on memory 104. Examples of processor 102 can include one or more of a processor, a microprocessor, a controller, a digital signal processor (DSP), an application specific integrated circuit (ASIC), a field-programmable gate array (FPGA), or other equivalent discrete or integrated logic circuitry. Processor 102 can be entirely or partially mounted on one or more circuit boards.

Memory 104 is configured to store information and, in some examples, can be described as a computer-readable storage medium. Memory 104, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, memory 104 is a temporary memory. As used herein, a temporary memory refers to a memory having a primary purpose that is not long-term storage. Memory 104, in some examples, is described as volatile memory. As used herein, a volatile memory refers to a memory wherein the memory does not maintain stored contents when power to the memory 104 is turned off. Examples of volatile memories can include random access memories (RAM), dynamic random access memories (DRAM), static random access memories (SRAM), and other forms of volatile memories. In some examples, the memory is used to store program instructions for execution by the processor. Memory 104, in one example, is used by software or applications running on controller 100 to temporarily store information during program execution.

Memory 104 can further be configured for long-term storage of information. In some examples, memory 104 includes non-volatile storage elements. Examples of such non-volatile storage elements can include, for example, magnetic hard discs, optical discs, floppy discs, flash memories, or forms of electrically programmable memories (EPROM) or electrically erasable and programmable (EEPROM) memories.

User interface 106 is an input and/or output device and/or software interface, and enables an operator to control operation of and/or interact with software elements of server 100. For example, user interface 106 can be configured to receive inputs from an operator and/or provide outputs. User interface 106 can include one or more of a sound card, a video graphics card, a speaker, a display device (such as a liquid crystal display (LCD), a light emitting diode (LED) display, an organic light emitting diode (OLED) display, etc.), a touchscreen, a keyboard, a mouse, a joystick, or other type of device for facilitating input and/or output of information in a form understandable to users and/or machines. In one or more additional examples, user interface 106 can include an application programming interface (API) for enabling one or more other devices to access functionality of controller 100.

Image capture module 150 is a software module of controller 100 and includes one or more programs for operating wide-view camera 110, close-up camera 120, and camera adjustment mechanism 130 to collect images of working surface 24, specific regions or portions of intermediate workpiece 30, etc.

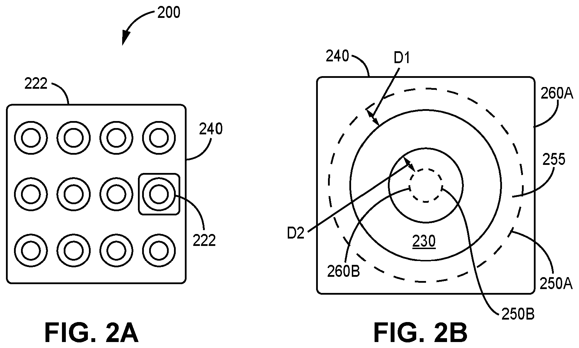

Image processing module 160 is another software module of controller 100 and includes one or more programs for data reduction of image data collected by image capture module 150. Image processing module 160 can reduce image data by applying a boundary mask to an image based on known positions of one or more workpieces in the image (i.e., determined according the geometric instructions for the build project), as will be explained in more detail subsequently and particularly with respect to the discussions of FIG. 2A, FIG. 2B, FIG. 3, and FIG. 4. Image processing module 160 also optionally includes one or more programs for analyzing images collected by image capture module 150 to identify defects in an intermediate workpiece, powder bed perturbations, etc.

Simulation module 170 is yet a further software module of controller 100 and includes one or more programs for simulating a build project performed by additive manufacturing system 10. The program(s) of simulation module 170 can be used to identify regions of an intermediate workpiece that are likely (i.e., have a likelihood above a threshold) to contain a defect formed during layer-by-layer manufacture.

The modules of server 100 are shown as separate software components in FIG. 1B for explanatory clarity and convenience. In other examples, any two or more of image capture module 150, image processing module 160, and simulation module 170 can be part of a single software program and/or application. Similarly, controller 100 is depicted as a single device in FIG. 1 for explanatory convenience. In other examples, the functionality of controller 100 can be distributed across any suitable number of physical and/or virtual devices.

FIG. 2A is a schematic diagram of an example of powder bed image 200 including multiple intermediate workpieces. Powder bed image 200 includes powder bed 222, intermediate workpiece 230, and zone 240. Powder bed 222 is a surface suitable for construction of parts by a layer-by-layer manufacturing technique and contains multiple intermediate workpieces constructed by the additive manufacturing apparatus. Powder bed 222 is a powder bed formed on a large-format build plate used by an additive manufacturing apparatus (e.g., additive manufacturing system 10). Intermediate workpiece 230 is one workpiece of the intermediate workpieces captured by powder bed image 200. Zone 240 is a portion of powder bed image 200 that captures intermediate workpiece 230. In some examples, intermediate workpiece 230 can be referred to as a "part-in-progress" and/or an "intermediate workpiece state."

Powder bed image 200 is a top-down image of powder bed 222 and captures a set of workpieces belonging to a single build project and is captured after a layer of the workpieces belonging to the build project has been completed. Powder bed image 200 is an "in-process" image of the construction of intermediate workpiece 230. A substantially similar image can be collected after each layer of the workpieces is manufactured using an additive manufacturing apparatus (e.g., additive manufacturing system 10; FIG. 1). Powder bed image 200 can be captured, for example, using a top-view camera of an additive manufacturing apparatus, such as wide-view camera 110 of additive manufacturing system 10 (FIG. 1).

Powder bed image 200 captures the entirety of powder bed 222, which is formed on a large format build plate, such that powder bed image 200 and other progress images of each layer formed during layer-by-layer manufacture are large and consume significant storage space. In some examples, all images for a single build project on a large-format build plate (e.g., all images of powder bed 222 taken during the build project) can be several terabytes in size. Advantageously, the present invention provides techniques for reducing image size based on known geometric coordinate information for each layer of each workpiece.

FIG. 2B is a schematic diagram of zone 240 of powder bed image 200. FIG. 2B shows intermediate workpiece 230 and also depicts outer boundary mask edge 250A, inner boundary mask edge 250B, included area 255, excluded area 260A, excluded area 260B, offset distance D1, and offset distance D2. Outer boundary mask edge 250A and inner boundary mask edge 250B collectively define a boundary mask that can be applied to powder bed image 200 and be used to crop or otherwise discard image data that does not depict intermediate workpiece 230. Outer boundary mask edge 250A and inner boundary mask edge 250B can be generated by image processing module 160 (FIG. 1) based on the expected location of the most-recent layer of intermediate workpiece 230 and offset distances D1 and D2, respectively. The expected location of the most-recent layer of intermediate workpiece 230 can be identified based on geometric instructions for generating the most-recent layer of intermediate workpiece 230 (i.e., the top layer captured in the top-down view of powder bed image 200. In particular, the contour data of the geometric instructions can be used to define the outer edges of the most-recent layer of intermediate workpiece 230 and, accordingly, the area of the most-recent layer of intermediate workpiece can be inferred.

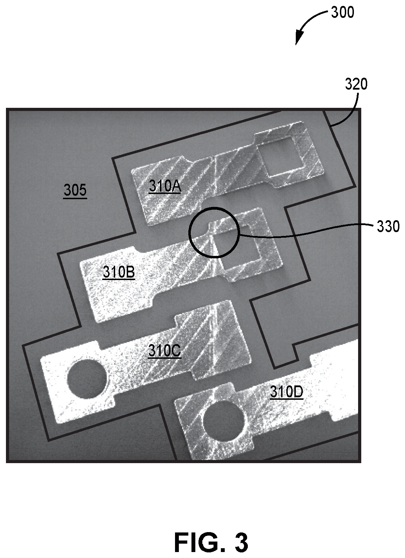

In the depicted example, intermediate workpiece 230 is a hollow cylinder, outer boundary mask edge 250A is concentric to the outer boundary of intermediate workpiece 230 and has a radial difference of D1, and inner boundary mask edge 250B is concentric to the outer boundary of intermediate workpiece 230 and has a radial difference of D2. However, in other examples, an intermediate workpiece can have a non-cylindrical and/or irregular shape, the process of generating a boundary mask can be performed in substantially the same manner. The discussion of powder bed image 300 (FIG. 3), discussed subsequently, elaborates on one such example.

Notably, each angular position of the outer surface of intermediate workpiece 230 is offset from a radially-aligned point (i.e., along a common radial line) of outer boundary mask edge 250A by distance D1. Similarly, each angular position of the inner surface of intermediate workpiece 230 is offset from a radially-aligned point (i.e., along a common radial line) of inner boundary mask edge 250B by distance D2. In this manner, it can be said more generally that outer boundary mask edge 250A is offset from each corresponding point along the outer boundary of intermediate workpiece 230 by distance D1 and inner boundary mask edge 250B is offset from each corresponding point along the inner boundary of intermediate workpiece by distance D2. Outer boundary mask edge 250A can be generated by identifying and connecting points that are spaced from the outer surface of intermediate workpiece 230 by distance D1. Similarly, inner boundary mask edge 250B can be generated by identifying and connecting points that are spaced from the outer surface of intermediate workpiece 230 by distance D2.

Once generated, the boundary mask defined by outer boundary mask edge 250A and inner boundary mask edge 250B can be used to trim the image data of powder bed image 200 to generate a data-reduced image. In particular, data corresponding to excluded area 260A and excluded area 260B, which are both outside of the boundary mask defined by outer boundary mask edge 250A and inner boundary mask edge 250B, can be deleted. Notably, included area 255, which is the area inside of the boundary mask defined by outer boundary mask edge 250A and inner boundary mask edge 250B, depicts the most-recent layer of intermediate workpiece 230 and is retained. Advantageously, the resulting data-reduced image has significantly reduced image size and discards images that do not contain intermediate workpiece 230.

However, some regions of powder bed 222 that do not contain intermediate workpiece 230 included in included area 255 and are retained after data-reduction. Including a limited portion of powder bed 222 that does not depict intermediate workpiece 230 advantageously allows the data-reduced image to capture perturbations to powder bed 222 near intermediate workpiece 230, which can be used for troubleshooting, process evaluation, defect detection, etc. Distances D1 and D2 can be defined to capture regions of powder bed 222 likely to contain perturbations and exclude regions that are unlikely to contain perturbations. The regions of powder bed 222 likely to contain perturbations can be determined by one or more of the process parameters used to generate a particular layer from pulverant material, the geometric coordinates used to generate the layer, properties of the pulverant material, and simulation by simulation module 170, among other options. If, for example, on one or more of the process parameters, the properties of the material, and simulation by simulation module 170 indicate that a particular area is likely to contain voiding and/or another type of defect, that area can have an increased offset distance relative to other regions not likely and/or significantly less likely to contain a defect.

FIG. 3 is depicts powder bed image portion 300, which is another example of a powder bed image that can be processed using controller 100 and which illustrates another example of a boundary mask. Powder bed image portion 300 depicts powder bed 305, intermediate workpieces 310A-310D, image mask 320, and possible defect-containing area 330. Powder bed image portion 300 depicts an example of a boundary mask that includes multiple intermediate workpieces.

Powder bed 305 is a surface suitable for construction of parts by a layer-by-layer manufacturing technique and contains multiple intermediate workpieces 310A-310D constructed by the additive manufacturing apparatus. Intermediate workpieces 310A-310D are coupon structures at an intermediate stage of layer-by-layer manufacture.

Boundary mask 320 is a boundary mask generated by image processing module 160 and encompasses all workpieces 310A-310D. In the depicted example, the spacing between intermediate workpieces 310A-310D is less than twice the offset distance used to generate boundary mask 320. As such, individual boundary masks applied to each workpiece 310A-310D would be less than the offset distance from at least one adjacent workpiece of workpieces 310A-310D, and applying individual boundary masks to each of workpieces 310A-310D would create multiple data-reduced images depicting overlapping portions of powder bed 305. Similarly, the offset value is less than twice the maximum distance in the hollow portions of each of workpieces 310A-310D. Advantageously, a single boundary mask 320 can be applied to a total area that collectively captures workpieces 310A-310D. The total area can be defined by the boundaries and edges of workpieces 310A-310D that collectively form the outermost edges of the group of workpieces 310A-310D. The outermost boundaries and edges that are used to define the area of workpieces 310A-310D can be defined based on the geometric instructions used to generate the layer depicted in powder bed image portion 300. Boundary mask 320 can then be generated as described with respect to outer boundary mask edge 250A and inner boundary mask edge 250B (FIG. 2B) based using an appropriate offset distance.

Possible defect-containing area 330 includes a portion of intermediate workpiece 310B that may contain a defect as well as surrounding portions of powder bed 305. Possible defect-containing area 330 can be identified based on one or more of manual inspection of powder bed image portion 300, automated detection by analysis of powder bed image portion 300 using program(s) of image processing module 160 (FIG. 1), and powder bed fusion simulation using simulation module 170. Possible defect-containing area 330 can then be imaged using close-up camera (e.g., close up camera 120; FIG. 1) to collect higher-resolution and/or more magnified image data of possible defect-containing area 330 than is depicted in powder bed image portion 300.

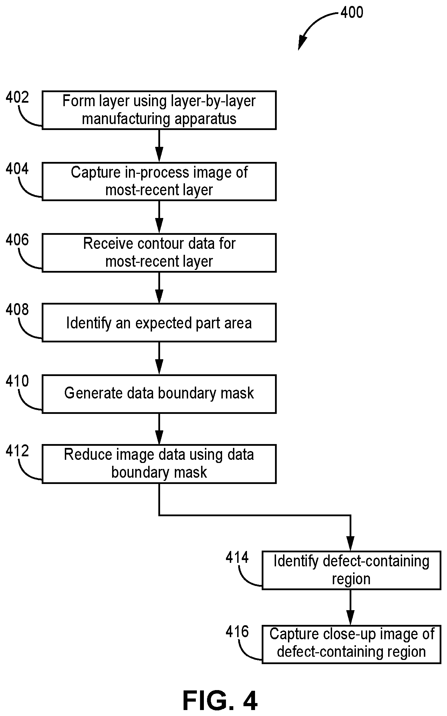

FIG. 4 is a flow diagram of method 400, which is a method of reducing image data of additively manufactured parts using boundary masks. Method 400 includes steps 402-416 of forming a layer using a layer-by-layer manufacturing method (step 402), capturing an in-process image of the most-recent layer (step 404), receiving contour data for the most-recent layer (step 406), identifying an expected part area (step 408), generating a data boundary mask (step 410), reducing image data using the data boundary mask (step 412), identifying a defect-containing region (step 414), and capturing a close-up image of the defect-containing region (step 416). Method 400 is generally described herein with reference to additive manufacturing system 10, but can be adapted to be used by any suitable additive manufacturing apparatus in other examples.

In step 402, additive manufacturing system 10 forms a layer of a build project at working surface 24 of powder bed 18. The layer is a new layer of at least one workpiece and is formed at the top (with respect to direction C) of powder bed 18 at working surface 24. The layer formed in step 402 has a thickness defined by the process parameters for the build project and/or the geometric instructions for the build projects.

In step 404, an in-process image of working surface 24 is captured by wide-view camera 110. The in-process image captures a known area of powder bed 18 (i.e., of working surface 24). The known area includes the build area of working surface 24, such that the in-process image captures the layer formed in step 402.

In step 406, contour data for the layer formed in step 402 is received. The contour data can be the geometric instructions for the layer formed in step 402 or can be derived from the geometric instructions for the layer formed in step 402. The contour data describes the periphery of each part having a layer formed in step 402. Where a part is hollow (e.g., workpiece 230; FIG. 2), the contour data describes both the outer and inner peripheries of the part.

In step 408, the expected part area is identified. Each expected part area identified in step 408 can be, for example, the area enclosed by the contour data received in step 406 for the part. Additionally and/or alternatively, where the contours of two or more workpieces are separated by less than the offset distance used in subsequent step 410, the expected part area can be defined to include more than one workpiece, as described previously with respect to the discussion of FIG. 3.

In step 410, a data boundary mask for each part is generated. The data boundary mask is generated based on the expected part area and one or more offset values. As explained with respect to FIGS. 2B and 3, the boundary mask generated in step 410 is offset from the expected part area by the offset value(s) and encompasses the expected part area. The offset value(s) can be selected based on user preference, the process parameters used to operate the layer-by-layer manufacturing apparatus in step 402, the geometric coordinates and/or contour information for the layer formed in step 402, properties of the pulverant material in powder bed 18, simulation by simulation module 170, any other suitable parameter, and any combination thereof to capture both the expected part area and an adjacent portion of powder bed 18. Multiple offset values can be used to capture additional portions of powder bed 18 in the data boundary mask in, e.g., areas likely to contain a defect or that are detected to have a defect (e.g., by image processing module 160). Areas likely to contain a defect can be determined based on, e.g., the process parameters used in step 402, the geometric coordinates and/or contour information used in step 402, properties of the pulverant material, simulation of powder bed fusion by simulation module 170, or any suitable combination thereof. In some examples, one or more regions can have region-specific offset values. In yet further examples, offset values can vary continuously or substantially continuously over the entire periphery of the expected part area.

For example, if a higher laser power is used to form a particular region of the layer in step 402, that region may be more likely to contain additional spatter ejections of pulverant material. As such, a larger offset value can be used in that region. As an additional example, the geometric instructions and/or contour information can be used to determine whether a particular geometry of the layer is challenging to form by powder bed fusion (e.g., if the geometry contains one or more thin material regions) or is otherwise likely to contain a defect. The offset value in the region that is likely to contain the defect can be greater than the offset value used in other regions. Properties of the pulverant material used in powder bed 18 can influence the expected spatter distance, whether a particular region is likely to contain a defect, etc. For example, a coarse pulverant material may be more readily associated with void defects. Further, simulation of part manufacture by simulation module 170 can be used to identify areas or regions likely to produce defects during layer-by-layer manufacture.

In some examples, the offset value can vary within a range according to the likelihood of deformation within different regions of each layer. The range can extend, for example, from 0.050 inches to 0.250 inches (1.27 mm to 6.35 mm). In at least one example, the offset value can be 0.050 inches (1.27 mm) in regions determined to have a low deformation risk and 0.250 inches (6.35 mm) in regions determined to have a high deformation risk. Deformation risk can be determined based on one or more of simulation, pulverant properties, process parameters, etc.

In step 412, the boundary mask generated in step 410 is used to reduce image data. The boundary mask is applied to the image captured in step 404 and image data not within the included area defined by the boundary mask (i.e., the image data within the excluded area) is deleted. The resultant image data is a data-reduced in-process image of the layer formed in step 402. The image generated in step 412 can then be stored to memory 104 and/or another suitable storage device for manual inspection by an operator and/or further automated evaluation to identify defects, evaluate build quality, etc.

In step 414, a defect-containing region is identified. The defect-containing region can be identified based on the in-process image captured in step 404 and/or the reduced-data in-process image generated in step 412. The defect-containing region can be identified by, for example, manual identification by a user. The defect-containing region can also be identified in an automated manner by the program(s) of image processing module 160. Any suitable method for identifying defects in additively-manufactured materials can be used by the relevant program(s) of image processing module 160. In some examples, defects can be identified based on perturbations to or aberrations of powder bed 18 at working surface 24.

In step 416, close-up camera 120 captures image data of the defect-containing region. The program(s) of image capture module 150 operate camera adjustment mechanism 130 to position close-up camera 120 and, further, to operate close-up camera 120 to capture a photo of the defect-containing image. The photo captured in step 416 can be referred to as "close-up image" and depicts the defect-containing region at a higher magnification and/or resolution than the in-process image captured in step 404. The close-up image can then be stored to memory 104 and/or another suitable storage device.

Steps 414 and 416 are optional steps of method 400 and are included in examples where it is advantageous to detect defects and capture close-up images during the additive manufacturing process. Advantageously, inclusion of steps 414 and 416 can enable lower-resolution images to be captured in step 404, as close-up images more clearly depicting defect-containing regions and regions potentially containing defects and aberrations can be captured in step 414 and 416. In this manner, inclusion of steps 414 and 416 can further reduce the image data required to adequately capture a working surface an additive manufacturing device in step 404 and, consequently, further reduce the size of data-reduced images generated in step 412.

In at least some examples, controller 100 can be connected to a database and/or memory 104 can include a database for organizing in-process images. In these examples, images generated in step 412 and, in relevant examples, captured in step 416 can be stored to the database.

Method 400 can be repeated for each layer formed during a build project and can be used to significantly reduce the total file size of images captured during a build project. Notably, method 400 enables the collection of in-process images that capture both intermediate workpiece layers and a portion of powder bed 18 likely to be useful for evaluating build quality, presence of aberrations, causes of aberrations (e.g., spatter), etc.

While method 400 is generally described herein with reference to additive manufacturing system 10, which is a system for powder bed fusion, method 400 can be adapted more generally to any suitable additive manufacturing apparatus. In some of these examples, the working surface of the additive manufacturing apparatus is not a powder bed, and method 400 can be adapted to enable preservation relevant portions of the non-powder bed working surface.

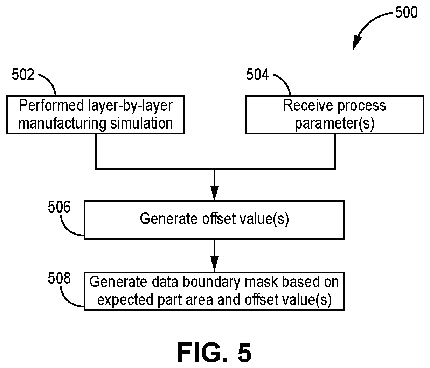

FIG. 5 is a flow diagram of method 500, which is a method of generating offset values and data boundary masks suitable for use in step 410 of method 400 (FIG. 4). Method 500 includes steps 502-508 of performing a simulation of layer-by-layer manufacturing (step 502), receiving one or more process parameters for a layer-by-layer manufacturing process (step 504), generating offset values (step 506), and generating the data boundary mask based on the expected part area and the offset values (step 508).

In step 502, the program(s) of simulation module 170 simulate the additive manufacture of a part. The program(s) of simulation module 170 can use the geometric instructions in addition to one or more of the process parameters for a build project, one or more properties of the pulverant (e.g., a material identity, a coarseness/particle size, etc.), and any other suitable parameter(s) to simulate a build project. Defects or regions likely to form defects can be identified during the simulation.

In step 504, one or more process parameters for operating the additive manufacturing apparatus (e.g., additive manufacturing system 10) are received. The process parameter(s) can define, for example, an intensity of a radiation beam used for pulverant fusion, a speed at which the beam is moved across the working surface of the pulverant, etc. The process parameter(s) received in step 504 describe at least the most-recently generated (i.e., current) layer of a build project (i.e., the layer imaged in step 404).

Steps 502 and 504 are both optional steps of method 500, but in all examples of method 500, at least one of steps 502 and 504 is performed. Method 500 is merely one method of performing step 410 and, in other examples of performing step 410, offset values can be generated without use of both simulation and process parameters.

In step 506, one or more offset values are generated for the layer imaged in step 404 based on the simulation performed in step 502 and/or the process parameters received in step 504. As described previously, the offset values can vary in different regions of the expected part area. In some examples, one or more regions can have region-specific offset values. In yet further examples, the offset value can vary continuously or substantially continuously over the entire periphery of the expected part area.

In step 508, the offset values are used in combination with the expected part area to generate the boundary in the manner described previously.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

### Discussion of Possible Embodiments

The following are non-exclusive descriptions of possible embodiments of the present invention.

A method of generating region-specific in-process monitoring data includes capturing a first in-process image of a known area of a working surface of a layer-by-layer manufacturing device during manufacture of a workpiece on the working surface, receiving first contour data for a current layer of the workpiece, identifying a first expected part area within the first in-process image that is predicted to capture the current layer of the workpiece based on the first contour data and dimensions of the known area, generating a first data boundary mask based on the first expected part area, and deleting pixel data of the first in-process image outside of the first data boundary mask to generate a first reduced in-process image.

The method of the preceding paragraph can optionally include, additionally and/or alternatively, any one or more of the following features, configurations and/or additional components or steps:
A method as set forth above, wherein the first data boundary mask defines a first area that is identical to the first expected part area.

A method as set forth above, wherein the first data boundary mask defines a first masked area that is larger than the first expected part area.

A method as set forth above, wherein the first boundary mask defines a first masked area having edges that are spaced from edges of the first expected part area by an offset value.

A method as set forth above, wherein the offset amount is based on at least one of a parameter of the layer-by-layer manufacturing device for forming the current layer, and a property of a pulverant used to form the current layer.

A method as set forth above and further comprising receiving process parameters for the current layer, wherein generating the first boundary mask comprises generating the first data boundary mask based on the first expected part area and the process parameters.

A method as set forth above, wherein the first boundary mask defines a first masked area having edges that are spaced from edges of the first expected part area within a first region by a first offset value, and within a second region by a second offset value.

A method as set forth above and further comprising receiving first process parameters for formation of the first region by the layer-by-layer manufacturing device, receiving second process parameters for formation of the second region by the layer-by-layer manufacturing device, generating the first offset value based on the first process parameters, and generating the second offset value based on the second process parameters.

A method as set forth above, wherein the layer-by-layer additive manufacturing device is a powder-bed fusion additive manufacturing device, and wherein generating the first data boundary mask comprises simulating formation of the current layer by powder-bed fusion additive manufacturing to identify a first predicted defect at a first location and a second predicted defect at a section location, defining the first region based on the first location and the second region based on the second location, generating the first offset value based on at least one of a type and a severity of the first predicted defect, and generating the second offset value based on at least one of a type and a severity of the second predicted defect.

A method as set forth above and further comprising forming a second layer of the workpiece on the current layer using the layer-by-layer manufacturing device, capturing a second in-process image of the known area of a working surface of a layer-by-layer manufacturing device, the second in-process depicting the second layer of the workpiece, receiving second contour data for the second layer of the workpiece, based on the second contour data and dimensions of the known area, identifying a second expected part area within the second in-process image that is predicted to capture the second layer of the workpiece, generating a second data boundary mask based on the second expected part area, and deleting pixel data of the second in-process image outside of the second data boundary mask to generate a second reduced in-process image.

A method as set forth above, wherein the second expected part area is different than the first expected part area.

A method as set forth above and further comprising, forming a third layer of the workpiece on the second layer using the layer-by-layer manufacturing device, capturing a third in-process image of the known area of a working surface of a layer-by-layer manufacturing device, the third in-process depicting the third layer of the workpiece, receiving third contour data for the third layer of the workpiece, based on the third contour data and dimensions of the known area, identifying a third expected part area within the third in-process image that is predicted to capture the third layer of the workpiece, generating a third data boundary mask based on the third expected part area, and deleting pixel data of the third in-process image outside of the third data boundary mask to generate a third reduced in-process image.

A method as set forth above, wherein the known area includes an entire extent of the working surface.

A method as set forth above, wherein capturing the first in-process image comprises capturing the first in-process image with a thermal imaging sensor, such that the first in-process image is a thermal image.

A method as set forth above, wherein capturing the first in-process image comprises capturing the first in-process image with a visual spectrum sensor, such that the first in-process image is a visual spectrum image.

A method as set forth above, and further comprising analyzing the first reduced in-process image to identify a region of the current layer likely to have a defect.

A method as set forth above, wherein capturing the first in-process image comprises capturing the first in-process image using a first camera having a first resolution, and further comprising, in response to identifying the region of the current layer adjusting at least one parameter of a second camera for capturing a close-up image of the region, the second camera having a second resolution that is greater than the first camera, and capturing the close-up image of the region using the second camera, wherein the close-up image of the region depicts a smaller area than the known area captured in the in-process image.

A method as set forth above, wherein the first camera comprises a first type of imaging sensor, such that the first in-process image is a first image type and the first reduced in-process image is the first image type, and the second camera comprises a second type of imaging sensor, such that the close-up image is a second image type.

A further method of generating region-specific in-process monitoring data includes capturing an in-process image of a known area of a working surface of a layer-by-layer manufacturing device, receiving first contour data for a current layer of a workpiece on the working surface, identifying a first expected part area within the in-process image that is predicted to capture the current layer of the workpiece based on the first contour data and dimensions of the known area, generating a first data boundary mask based on the first expected part area, deleting pixel data of the in-process image outside of the first data boundary mask to generate a first reduced in-process image, analyzing at least one of the in-process image and the first reduced in-process image to identify a region of the current layer likely to have a defect, and adjusting at least one parameter of a second camera for capturing a close-up image of the region. The second camera has a second resolution that is greater than the first camera. The method further includes, after adjusting the at least one parameter, capturing the close-up image of the region using the second camera.

The method of the preceding paragraph can optionally include, additionally and/or alternatively, any one or more of the following features, configurations and/or additional components or steps:
A method as set forth above and further comprising, after capturing the close-up image, forming a next layer of the workpiece using the layer-by-layer manufacturing device.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method (400) of generating region-specific in-process monitoring data, the method (400) comprising:
capturing a first in-process image (200; 300) of a known area of a working surface (24) of a layer-by-layer manufacturing device (10) during manufacture of a workpiece (230; 310) on the working surface (24);
receiving first contour data for a current layer of the workpiece (230; 310);
based on the first contour data and dimensions of the known area, identifying a first expected part area within the first in-process image (200; 300) that is predicted to capture the current layer of the workpiece (230; 310);
generating a first data boundary mask (250; 320) based on the first expected part area; and
deleting pixel data of the first in-process image (200; 300) outside of the first data boundary mask (250; 320) to generate a first reduced in-process image.

2. The method of claim 1, wherein:
the first data boundary mask (250; 320) defines a first area that is identical to the first expected part area; or
the first data boundary mask (250; 320) defines a first masked area that is larger than the first expected part area.

3. The method of claim 1 or 2, wherein the first boundary mask (250; 320) defines a first masked area having edges that are spaced from edges of the first expected part area by an offset value.

4. The method of claim 3, wherein the offset amount is based on at least one of:
a parameter of the layer-by-layer manufacturing device (10) for forming the current layer; and
a property of a pulverant used to form the current layer.

5. The method of any preceding claim, further comprising receiving process parameters for the current layer, wherein generating the first boundary mask (250; 320) comprises generating the first data boundary mask (250; 320) based on the first expected part area and the process parameters.

6. The method of any preceding claim, wherein the first boundary mask (250; 320) defines a first masked area having edges that are spaced from edges of the first expected part area: within a first region by a first offset value (D1); and within a second region by a second offset value (D2), and wherein, optionally, the method further comprises:
receiving first process parameters for formation of the first region by the layer-by-layer manufacturing device (10);
receiving second process parameters for formation of the second region by the layer-by-layer manufacturing device (10);
generating the first offset value (D1) based on the first process parameters; and
generating the second offset value (D2) based on the second process parameters.

7. The method of claim 6, wherein the layer-by-layer additive manufacturing device (10) is a powder-bed fusion additive manufacturing device, and wherein generating the first data boundary mask (250; 320) comprises:
simulating formation of the current layer by powder-bed fusion additive manufacturing to identify a first predicted defect at a first location and a second predicted defect at a section location;
defining the first region based on the first location and the second region based on the second location;
generating the first offset value (D1) based on at least one of a type and a severity of the first predicted defect; and
generating the second offset value (D2) based on at least one of a type and a severity of the second predicted defect.

8. The method of any preceding claim, further comprising:
forming a second layer of the workpiece (230; 310) on the current layer using the layer-by-layer manufacturing device (10);
capturing a second in-process image of the known area of a working surface (24) of a layer-by-layer manufacturing device (10), the second in-process depicting the second layer of the workpiece (230; 310);
receiving second contour data for the second layer of the workpiece (230; 310);
based on the second contour data and dimensions of the known area, identifying a second expected part area within the second in-process image that is predicted to capture the second layer of the workpiece (230; 310);
generating a second data boundary mask based on the second expected part area; and
deleting pixel data of the second in-process image outside of the second data boundary mask to generate a second reduced in-process image,
wherein, optionally, the second expected part area is different than the first expected part area.

9. The method of claim 8, further comprising:
forming a third layer of the workpiece (230; 310) on the second layer using the layer-by-layer manufacturing device (10);
capturing a third in-process image of the known area of a working surface (24) of the layer-by-layer manufacturing device (10), the third in-process depicting the third layer of the workpiece (230; 310);
receiving third contour data for the third layer of the workpiece (230; 310);
based on the third contour data and dimensions of the known area, identifying a third expected part area within the third in-process image that is predicted to capture the third layer of the workpiece (230; 310);
generating a third data boundary mask based on the third expected part area; and
deleting pixel data of the third in-process image outside of the third data boundary mask to generate a third reduced in-process image.

10. The method of any preceding claim, wherein the known area includes an entire extent of the working surface (24).

11. The method of any preceding claim, wherein capturing the first in-process image (200; 300) comprises:
capturing the first in-process image (200; 300) with a thermal imaging sensor, such that the first in-process image is a thermal image; or
capturing the first in-process image (200; 300) with a visual spectrum sensor, such that the first in-process image is a visual spectrum image.

12. The method of any preceding claim, further comprising analyzing the first reduced in-process image to identify a region of the current layer likely to have a defect.

13. The method of claim 12, wherein capturing the first in-process image (200; 300) comprises capturing the first in-process image (200; 300) using a first camera having a first resolution, and further comprising, in response to identifying the region of the current layer:
adjusting at least one parameter of a second camera for capturing a close-up image of the region, the second camera having a second resolution that is greater than the first camera; and
capturing the close-up image of the region using the second camera, wherein the close-up image of the region depicts a smaller area than the known area captured in the in-process image.

14. The method of claim 13, wherein:
the first camera comprises a first type of imaging sensor, such that the first in-process image is a first image type and the first reduced in-process image is the first image type; and
the second camera comprises a second type of imaging sensor, such that the close-up image is a second image type.

15. A method of generating region-specific in-process monitoring data, the method comprising:
capturing an in-process image (200; 300) of a known area of a working surface (24) of a layer-by-layer manufacturing device (10);
receiving first contour data for a current layer of a workpiece (230; 310) on the working surface (24);
based on the first contour data and dimensions of the known area, identifying a first expected part area within the in-process image (200; 300) that is predicted to capture the current layer of the workpiece (230; 310);
generating a first data boundary mask (250; 320) based on the first expected part area;
deleting pixel data of the in-process image (200; 300) outside of the first data boundary mask (250; 320) to generate a first reduced in-process image;
analyzing at least one of the in-process image (200; 300) and the first reduced in-process image to identify a region of the current layer likely to have a defect;
adjusting at least one parameter of a second camera for capturing a close-up image of the region, the second camera having a second resolution that is greater than the first camera; and
after adjusting the at least one parameter, capturing the close-up image of the region using the second camera; and, optionally
after capturing the close-up image, forming a next layer of the workpiece (230; 310) using the layer-by-layer manufacturing device (10).
